# EUROPEAN PATENT SPECIFICATION

(11) **EP 3 713 274 B1**
(45) Date of publication and mention of the grant of the patent: **07.01.2026**
(21) Application number: 19163728.9
(22) Date of filing: 19.03.2019
(51) Int. Cl.: H04W 12/06, H04W 12/04, H04W 12/00, H04W 12/72, H04W 12/40, H04W 12/041, H04L 9/40

(54) **TECHNIQUES FOR AUTHENTICATING A UE IN A SECOND COMMUNICATION NETWORK BASED ON AN AUTHENTICATION IN A FIRST COMMUNICATION NETWORK**
VERFAHREN ZUR AUTHENTIFIZIERUNG EINES BENUTZERGERÄTS IN EINEM ZWEITEN KOMMUNIKATIONSNETZWERK BASIEREND AUF EINER AUTHENTIFIZIERUNG IN EINEM ERSTEN KOMMUNIKATIONSNETZWERK
TECHNIQUES D'AUTHENTIFICATION D'UN ÉQUIPEMENT UTILISATEUR DANS UN SECOND RÉSEAU DE COMMUNICATION SUR LA BASE D'UNE AUTHENTIFICATION DANS UN PREMIER RÉSEAU DE COMMUNICATION

(43) Date of publication of application: 23.09.2020
(73) Proprietor: Deutsche Telekom AG, 53113 Bonn (DE); Giesecke+Devrient Mobile Security Germany GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- US-A1- 2012 264 402
- "3 Generation Partnership Project; Technical Specification Group Services and System Aspects; Security architecture and procedures for 5G system (Release 15)", 3GPP STANDARD; TECHNICAL SPECIFICATION; 3GPP TS 33.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V15.3.1, 26 December 2018 (2018-12-26), pages 1 - 181, XP051591577, [retrieved on 20181226]

## Description

### TECHNICAL FIELD

The disclosure relates to techniques for authenticating an User Equipment, UE, in a second communication network, in particular a private Company network, based on an authentication in a first communication network, in particular a 5G network, which allows the flexible re-use of the status "authenticated" from the first network. To avoid misunderstandings, the disclosure describes not the re-use of the keys or authentication procedure. Instead of this, the status "authenticated" in the first communication network is propagated to the second communication network.

The disclosure further relates to extending a SIM (Subscriber Identity Module) authentication in a first communication network to services and applications of a second communication network.

### BACKGROUND

User Equipments (UEs) in the mobile network are authenticated by the mobile network operator (MNO). Complex authentication procedures are being processed in order to fulfill security demands. Hence, provision of edge computing devices results in high complexity and costs for the network operator and the user of these devices.

For company networks a dedicated IAM system (Identity & Access Management) is currently used for authentication purposes, causing operational costs and security risks. For this reason, each company must currently define its own authentication procedures and also carry out the distribution and secure storage of the authentication credentials.

US 2012/264402 A1 discloses that a user device is authenticated in a first network (3G/4G) using its SIM card as credentials. The device receives its authentication status and transmits it to a second network (WiFi) it wants to connect. The second network contacts the first network to confirm the authentication status of the user device. If authenticated in the first network, access to the second network is provided.

### SUMMARY OF THE INVENTION

It is the object of the present invention to provide a concept to solve the above-mentioned problems, in particular to provide a solution for reducing complexity and improving security when making resources of a Company network or processing power of an edge processing device available for a UE. In particular, it is the object of the invention to provide a concept for an efficient authentication of a UE in a second communication network such as a private Company network or the Internet based on an authentication of the UE in a first communication network, e.g. a public 5G network.

The foregoing and other objects are achieved by the subject matter of the independent claims. Further implementation forms are apparent from the dependent claims, the description and the figures.

The disclosure is based on a novel authentication concept making the authentication via the SIM also available for services in a company network. An extension of the SIM authentication allows reusing the authentication and security infrastructure for authentication in the corporate network. This has particular advantages in combining campus with public networks, as the mobile network operator (MNO)'s highly secure SIM-based authentication infrastructure can be reused for third-party services.

The 5G system offers the possibility to forward data for third party services directly from the UPF (User Plane Function) into a proprietary data network (Company Network) without interaction with the core network still using the components for the 5G network authentication. In addition, 5G offers the possibility to integrate third-party services via Network Exposure Function (NEF) into the core network of the MNO.

According to the authentication concept described hereinafter, the security architecture and network authentication of the 5G system can be used to secure access to any data network. The SIM in any form (UICC, embedded UICC or integrated UICC) card thereby replace an authentication token for application specific functions.

Via a specific NEF, the mobile network operator enables its customers to use the SIM authentication status for their own purposes. The UDM (Unified Data Management) can be extended so that the credentials for the login in the data network of the third party are also administered there. The NEF acts as a specific ASF (Authentication Server Function) for the company network (DN = Data Network). A corresponding extension of the authentication can also be implemented in the UE, especially in the SIM of the UE. Successful authentication in the 5G core network automatically provides the security parameters for a secure connection to the customer's DN. The typical AAA functionality (authentication, authorization and accounting) is thus extended by a path in the company network i.e. authentication is only done in the cellular core network and the authentication status triggers and authorization and eventually also an accounting in a third party network.

The novel authentication concept hence provides the following advantages: The life-cycle management of the identity and authentication parameters is performed in the MNO network. The company does not have to worry about "revoking" new users or "revoking" invalid identities. In many local IAM (Identity & Access Management) systems, poor identity and life cycle management poses a security risk, e.g. for PKI certificates. The authentication parameters are protected by the high security of the SIM card and the related processes, e.g. personalization processes. Secure management of user identities and cryptographic keys can be provided by the mobile operator. The company does not have to invest in data security but can build on the security infrastructure of the SIM supplier and mobile operator.

In a variant of the authentication concept, a method for the authentication between a mobile terminal and a service on the Internet without revealing the original key of the mobile network is introduced. This variant can be used for authentication on an Edge computing device. The solution includes the following steps: 1. A symmetric key Ks is negotiated between the Authentication Center (AUC) in the core network of the mobile service provider and the terminal. The agreement of the key Ks can be done statically or dynamically via an asymmetric "handshake". 2. With a derivative function, e.g. symmetric encryption, a new authentication key Kj in the AUC and the terminal is calculated from the already existing network authentication key Ki and the Ks. 3. This new authentication key Kj is passed from the AUC to the service to be used. 4. Terminal and service can authenticate each other with this new key Kj. For this, any symmetric algorithm can be chosen, e.g. AES256. A reuse of the network authentication algorithm is not necessary, but possible.

Optionally, the key Kj can be forwarded to an Edge Computing Device and can be used for authenticating for example a low latency connection between the Edge computing device and the terminal. Ks has a limited validity and can also be shared with other Edge devices.

This variant of the authentication concept provides the following advantages: Mobile 5G endpoints such as cars, mobile phones, etc. can perform ad hoc authentication with a stationary Edge gateway without requiring direct provision of the authentication key from the AUC. Thus the novel authentication concept can provide higher security and fast authentication.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

The devices, systems and methods presented below are capable of transmitting information over a communication network. The term communication network or communication system refers to the technical infrastructure on which the transmission of signals takes place. The communication network essentially comprises the switching network in which the transmission and switching of the signals takes place between the stationary devices and platforms of the mobile radio network or fixed network, and the access network in which the transmission of the signals takes place between a network access device and the communication terminal. The communication network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication terminal or user equipment as described above, for example, a mobile phone or a mobile device with mobile adapter or a machine terminal.

According to a first aspect the invention relates to a communication system, comprising: an User Equipment, UE, comprising a subscriber identity module, SIM, storing an identity of an UE owner, UE ID, in particular an International Mobile Subscriber Identity, IMSI, and an authentication key, Ki, a first communication network, in particular a cellular network, comprising a first authentication server configured to authenticate the UE owner on the first communication network based on the UE ID and the authentication key, Ki; a second communication network, in particular a cellular or mobile network, comprising a second authentication server; and a network interface between the first authentication server and the second authentication server, wherein the first authentication server acts as master and is configured to propagate an authentication status of an UE owner in the first communication network to the second authentication server, wherein the second authentication server is configured to grant the UE owner rights in the second communication network depending on the authentication status of the UE owner in the first communication network.

Such a communication system provides a solution for reducing complexity and improving security when making resources of a second communication network available for a UE that is authenticated within in first communication network. The system provides an efficient authentication of the UE in the second communication network based on authentication of the UE in the first communication network, for example in a public 5G network. The highly secure authentication via the SIM in a first communication network, e.g. a public mobile network, can be efficiently made available for services, applications or resource usage in a second communication network, e.g. a company network or other private network. An extension of the SIM authentication allows reusing the authentication and security infrastructure for authentication in the corporate network. This has particular advantages in combining campus with public networks, as the mobile network operator (MNO)'s highly secure SIM-based authentication infrastructure can be reused for third-party services.

In an exemplary implementation form of the communication system, the second authentication server is configured to activate services and/or applications based on the propagated authentication status of the UE owner in the first communication network.

This provides the advantage that the highly secure authentication of the first communication network can be applied in the second communication network to provide activation of services and/or applications with the same high degree of security. Besides, the second communication network can be released from authentication tasks.

In an exemplary implementation form of the communication system, the second authentication server is located on an Edge computing device and is configured to activate local services and/or applications, which are executed on a computing platform of the Edge computing device.

This provides the advantage that the second authentication server can be a low-complexity server that can be efficiently implemented on the Edge computing device. Hence, the second authentication server can be arranged in close proximity to the UE, thereby reducing latency of signal flows.

In an exemplary implementation form of the communication system, the second authentication server is configured to establish secure channels between the UE and services and/or applications in the second communication network based on a cryptographic key, Kj, propagated together with the authentication status from the first authentication server.

This provides the advantage that key material from the first communication network can be used in the second communication network. Hence, a single authentication server in the first communication network is sufficient for providing the keys in both networks. This reduces complexity of the second communication network while increasing security.

In an exemplary implementation form of the communication system, the second authentication server is configured to reuse 2G/3G/4G identifier International Mobile Subscriber Identity, IMSI, of the first communication network for identity management purposes in the second communication network.

This provides the advantage that the identity management of both communication networks can be entangled providing a close relationship of both networks.

In an exemplary implementation form of the communication system, authentication credentials for the first communication network are stored on a 2G/3G Subscriber Identity Module, SIM, or 4G Universal Subscriber Identity Module, USIM, according ETSI standards.

This provides the advantage that the authentication credentials can be stored on a highly secure SIM or USIM module available in the first communication network. Hence the strong security environment of the first communication network can be utilized in the second communication network. Such a system provides higher security and fast authentication.

In an exemplary implementation form of the communication system, the first communication network comprises a virtualized 5G network and the second communication network comprises a private data network, in particular a company network.

As consequence the authentication server of the 5G network is virtualized, which allows a closer proximity of the both authentication servers.

The security architecture and network authentication of the 5G system can be used to secure access to any data network. The SIM card thereby becomes an authentication token for application specific functions.

In an exemplary implementation form of the communication system, the network interface is arranged between an Authentication Server Function (ASF) according 5G standards and the second authentication server, which is implemented in form of a generic 5G Network Exposure Function (NEF), wherein identity and authentication credentials of the first authentication server are stored in an Unified Data Management, UDM, according 5G standards.

This provides the following advantages: Via a specific NEF, the mobile network operator can enable its customers to use the SIM authentication for their own purposes. The UDM (Unified Data Management) can be extended so that the credentials for the login in the data network of the third party are also administered there.

Available functionalities of the 5G system architecture can be used to implement the new functionalities of the concept according to the disclosure. Hence, the new functionality can be implemented in an existing standard.

In an exemplary implementation form of the communication system, the UDM is configured to store the identity of the UE owner in form of a Subscription Permanent Identifier, SUPI.

This provides the advantage that the second communication network can be informed by the SUPI about the UE owner that shall be authorized in the second communication network. Hence, UE owners of different first communication networks can be identified in this way.

In an exemplary implementation form of the communication system, the second authentication server is configured to reuse the Subscription Permanent Identifier, SUPI, for identity management purposes in the second communication network.

This provides the advantage that a SUPI identity in the first communication network can be reused in the second communication network. Hence, the second communication network need no complex identity management.

In an exemplary implementation form of the communication system, authentication credentials for the first communication network are stored on a 5G Universal Subscriber Identity Module, USIM, according ETSI standards.

This provides the advantage that the authentication credentials for the first communication network can be stored on a highly secure USIM module available in the first communication network. Hence the strong security environment of the first communication network can be utilized in the second communication network.

In an exemplary implementation form of the communication system, the authentication credentials for the first communication network are stored on an embedded or integrated Universal Subscriber Identity Module according ETSI standards directly integrated in the User Equipment, UE, hardware without external contacts.

This provides the advantage that security can be improved when storing the authentication credentials on an embedded or integrated USIM module integrated in the UE without external contacts. No external contacts provide no tool for reading out the credentials.

According to a second aspect the invention relates to a method for propagating an authentication status of an User Equipment, UE, owner from a first communication network to a second communication network, the method comprising: storing an identity of an User Equipment, UE, owner, UE ID, in particular an International Mobile Subscriber Identity, IMSI, and an authentication key, Ki, by a subscriber identity module, SIM, of the UE; authenticating the UE owner on the first communication network, by a first authentication server of a first communication network, based on the UE ID and the authentication key, Ki; propagating an authentication status of an UE owner in the first communication network, by the first authentication server acting as a master, to a second authentication server of a second communication network; and granting the UE owner, by the second authentication server, rights in the second communication network depending on the authentication status of the UE owner in the first communication network.

Such a method provides a solution for reducing complexity and improving security when making resources of a second communication network available for a UE that is authenticated within in first communication network. The method provides an efficient authentication of the UE in the second communication network based on authentication of the UE in the first communication network, for example in a public 5G network. The highly secure authentication via the SIM in a first communication network, e.g. a public mobile network, can be efficiently made available for services, applications or resource usage in a second communication network, e.g. a company network or other private network. An extension of the SIM authentication allows reusing the authentication and security infrastructure for authentication in the corporate network. This has particular advantages in combining campus with public networks, as the mobile network operator (MNO)'s highly secure SIM-based authentication infrastructure can be reused for third-party services.

In an exemplary implementation form of the method, the method comprises: activating, by the second authentication server, services and/or applications based on the propagated authentication status of the UE owner in the first communication network.

This provides the advantage that the highly secure authentication of the first communication network can be applied in the second communication network to provide activation of services and/or applications with the same high degree of security. Besides, the second communication network can be released from authentication tasks.

In an exemplary implementation form of the method, the method comprises: establishing secure channels between the UE and services and/or applications in the second communication network based on a cryptographic key, Kj, propagated together with the authentication status from the first authentication server.

This provides the advantage that key material from the first communication network can be used in the second communication network. Hence, a single authentication server in the first communication network is sufficient for providing the keys in both networks. This reduces complexity of the second communication network while increasing security.

According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a block diagram of a communication system 100 according to the disclosure;
Fig. 2 shows a system architecture 200 of a 5G Campus network 102 in vicinity of a public 5G network 101 according to the disclosure;
Fig. 3 shows an exemplary message diagram 300 for authenticating a UE 110 on the 5G Campus network 102 based on an authentication on the public 5G network according to the disclosure;
Fig. 4 shows a schematic diagram illustrating a symmetric authentication of a SIM in a mobile network;
Fig. 5a shows a schematic diagram illustrating a symmetric authentication of a SIM for using a service, in particular an Internet service;
Fig. 5b shows an exemplary cryptographic algorithm for deriving a second authentication key Kj from a first authentication key Ki based on an encryption key Ks;
Fig. 6 shows a schematic diagram illustrating an exemplary authentication of an EDGE device based on a SIM module of a mobile terminal; and
Fig. 7 shows a schematic diagram of a method 700 for propagating an authentication status of an UE owner from a first communication network to a second communication network according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following section, Edge computing nodes and Edge computing devices are described. Edge computing is a distributed computing paradigm in which computation is largely or completely performed on distributed device nodes known as smart devices or Edge devices as opposed to primarily taking place in a centralized cloud environment. The eponymous "Edge" refers to the geographic distribution of computing nodes in the network as Internet of Things devices, which are at the "Edge" of an enterprise, metropolitan or other network. The motivation is to provide server resources, data analysis and artificial intelligence ("ambient intelligence") closer to data collection sources and cyber-physical systems such as smart sensors and actuators. Edge computing is seen as important in the realization of physical computing, smart cities, ubiquitous computing and the Internet of Things.

Edge computing pushes applications, data and computing power (services) away from centralized points to the logical extremes of a network. Edge computing takes advantage of microservices architectures to allow some portion of applications to be moved to the Edge of the network. Edge Computing moves fragments of application logic out to the Edge. As a technological paradigm, Edge computing may be architecturally organized as peer-to-peer computing, autonomic (self-healing) computing, grid computing, and by other names implying non-centralized availability.

In the following, network devices and network entities are described such as network access entities and core network entities. The network access entity enables access and mobility management in the communication network. Via the network access entity, communication terminals with their identity (UE ID) can register in the communication network and receive the permission to set up a communication connection. For example, in the 5G communication network, the network access entity may be an AMF (Access and Mobility Management Function) representing the access and mobility management function. This manages the access and mobility control. The AMF may also include network slice selection functionality. For wireless access, mobility management is not needed. The network access entity may be, for example, an MME (mobility management entity) in the 4G communication network. The MME is a network component of the LTE (Long Term Evolution) mobile radio standard, which performs the functions of paging to set up calls and generally communication links as well as signaling for control purposes. The MME forms the link between core network and access network. The MME manages the locations of all mobile communication terminals in the radio cells connected to it. In the LTE system, several cells are usually combined to form a tracking area. The management area of an MME can be divided into several tracking areas.

The radio access network (RAN) is part of a mobile communication system. It implements a radio access technology (RAT). Conceptually, it resides between a communication terminal or communication device such as a mobile phone, a computer, or any remotely controlled machine and provides connection with its core network (CN). Depending on the standard, mobile phones and other wireless connected terminals or devices are varyingly known as user equipment (UE), terminal equipment, mobile station (MS), etc. RAN functionality is typically provided by a RAN entity, e.g. a silicon chip, residing in both the core network as well as the user equipment. Examples of radio access network types are GERAN, the GSM radio access network including EDGE packet radio services, UTRAN, the UMTS radio access network, E-UTRAN, the LTE radio access network and the 5G RAN. The RAN entity can for example include a base station, e.g. a NodeB or and eNodeB or a 5G capable radio cell.

The network access entity further provides the technical function of first establishing a security relationship with a previously unknown security device, in order to then be able to install security elements (keys) in the terminal or device itself and in the network application function (NAF) of the network access function. For example, the Diameter and Hypertext Transfer Protocol (http) protocols can be used.

Involved in the maintenance of such a generic security relationship are the following functional elements: communication terminal, e.g. a mobile phone, i.e. User Equipment (UE), which wants to use a particular service, application server that provides the service, e.g. for Mobile TV, VoLTE, VoIP, FTP data transfer, media streaming, Internet browsing, etc., Network Application Function (NAF), the network access entity itself, which establishes a security relationship between UE and NAF and a database of the home network, e.g. HSS Home Subscriber Server (HSS) or UDR, unified data repository of the (mobile) network provider, which manages the respective user-specific profiles of its terminal users.

The network access entity network access feature is consulted by the application server (NAF) after a terminal has requested service access from it. Since the application server does not yet know the terminal at this time, it first refers this to the network access function. The terminal and the network access function now authenticate to each other; this can be done, for example, by means of the AKA protocol (Authentication and Key Agreement) and by inquiring the network access function to the Home Subscriber Server (HSS) or the UDR database of the home network. Subsequently, the network access function and the terminal (UE) agree on a session key to be used for encrypted data exchange with the application server (NAF). If the terminal now again turns to the application server, it can obtain both the session key and subscriber-specific data from the network access function and start the data exchange with the terminal (UE). The appropriate session keys are used for cryptographic protection.

In the following, authentication of a UE on a first communication network by use of a SIM is described. A subscriber identity module or subscriber identification module (SIM), widely known as a SIM card, is an integrated circuit that is intended to securely store the international mobile subscriber identity (IMSI) number and its related key, which are used to identify and authenticate subscribers on mobile communication devices (such as mobile phones and computers). SIM cards store network-specific information used to authenticate and identify subscribers on the network. The most important of these are the ICCID, IMSI, Authentication Key (Ki), Local Area Identity (LAI) and Operator-Specific Emergency Number. The SIM also stores other carrier-specific data such as the SMSC (Short Message Service Center) number, Service Provider Name (SPN), Service Dialing Numbers (SDN), etc. SIM cards are identified on their individual operator networks by a unique International Mobile Subscriber Identity (IMSI). Mobile network operators connect mobile phone calls and communicate with their market SIM cards using their IMSIs.

The authentication process includes the following steps: 1) When the mobile equipment starts up, it obtains the international mobile subscriber identity (IMSI) from the SIM card, and passes this to the mobile operator, requesting access and authentication. The mobile equipment may have to pass a PIN to the SIM card before the SIM card reveals this information. 2) The operator network searches its database for the incoming IMSI and its associated Kᵢ. 3) The operator network then generates a random number (RAND) and signs it with the Kᵢ associated with the IMSI (and stored on the SIM card), computing another number, that is split into the Signed Response 1 (SRES_1, 32 bits) and the encryption key K_{c} (64 bits). 4) The operator network then sends the RAND to the mobile equipment, which passes it to the SIM card. The SIM card signs it with its Kᵢ, producing SRES_2 and K_{c}, which it gives to the mobile equipment. The mobile equipment passes SRES_2 on to the operator network. 5) The operator network then compares its computed SRES_1 with the computed SRES_2 that the mobile equipment returned. If the two numbers match, the SIM is authenticated, and the mobile equipment is granted access to the operator's network. K_{c} is used to encrypt all further communications between the mobile equipment and the network.

In the 5G system, there are various identifiers at subscriber level and equipment level that may be used for authentication of the UE in a second communication network as described in the following. The Subscription Permanent Identifier (SUPI) is an identifier at Subscriber level that is provisioned in the UDM/UDR. It is based on IMSI (according to 3GPP TS 23.003) and Network specific identifier (according to 3GPP TS 22.261). In this way, UE can present its IMSI to the network in inter-working scenarios. The Subscription Concealed Identifier (SUCI) is an identifier at Subscriber level used to preserve privacy; more details can be found in 3GPP TS 33.501.

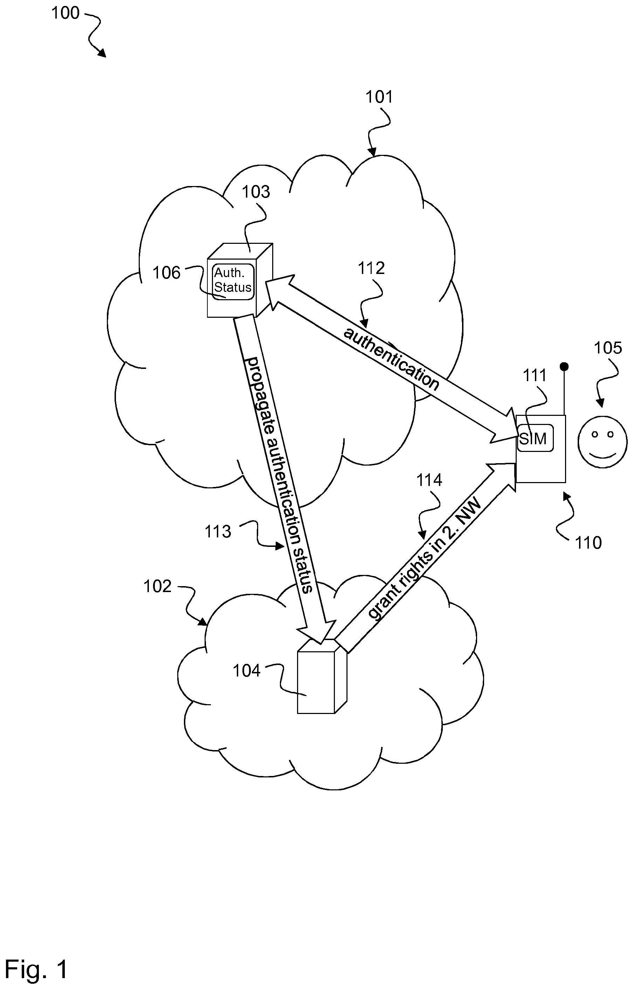

Fig. 1 shows a block diagram of a communication system 100 according to the disclosure. The communication system 100 includes a User Equipment, UE 110, comprising a subscriber identity module, SIM 111, a first communication network 101, e.g. a cellular network, comprising a first authentication server 103, a second communication network 102, e.g. a cellular or mobile network, comprising a second authentication server 104. Both communication networks are coupled by a network interface.

The SIM 111 stores an identity of an UE owner 105, UE ID, such as an International Mobile Subscriber Identity (IMSI), and further stores authentication key, Ki of the UE owner. The first communication network 101 is configured to authenticate 112 the UE owner 105 on the first communication network 101 based on the UE ID and the authentication key, Ki. The first authentication server 103 acts as master and is configured to propagate 113 an authentication status 106 of the UE owner 105 in the first communication network 101 to the second authentication server 104. The authentication status 106 may indicate a result of the authentication process, e.g. "authenticated" or "not authenticated". The first authentication server 103 may store for each UE owner a respective authentication status. The second authentication server 104 is configured to grant the UE owner 105 rights 114 in the second communication network 102 depending on the authentication status 106 of the UE owner 105 in the first communication network 101. For example, when authentication status of the UE owner 105 is "not authenticated" no rights will be granted to the UE owner 105 in the second communication network. Otherwise, when authentication status of the UE owner 105 is "authenticated" rights (e.g. corresponding to the rights granted in the first communication network) will be granted to the UE owner 105 in the second communication network 102.

The second authentication server 104 may activate services 401 and/or applications based on the propagated authentication status 106 of the UE owner 105 in the first communication network 101.

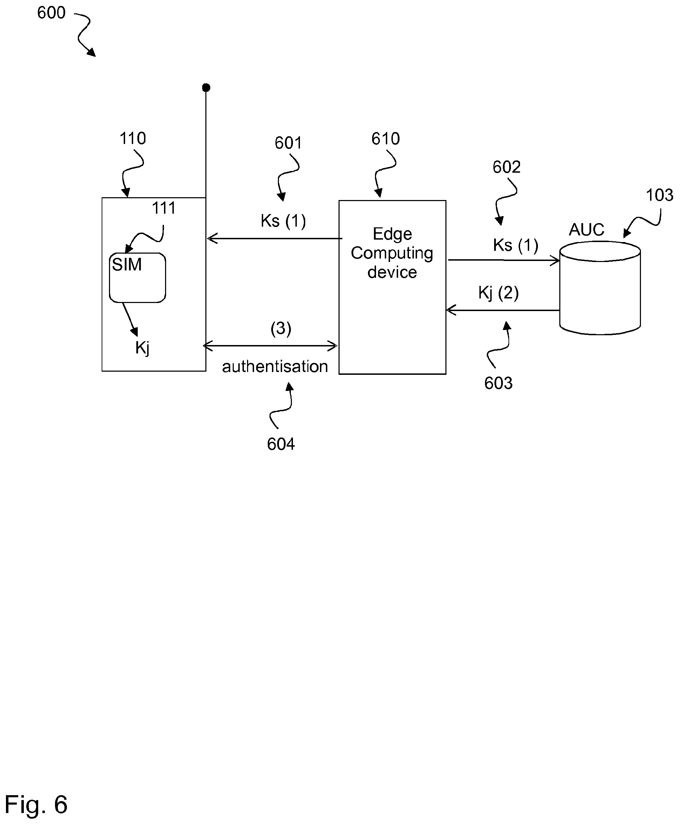

The second authentication server 104 may be located in an Edge computing device (e.g. of the first or second communication network), e.g. an EDGE computing device 610 as described below with respect to Fig. 6, and is configured to activate local services and/or applications, which are executed on a computing platform of the Edge computing device 610.

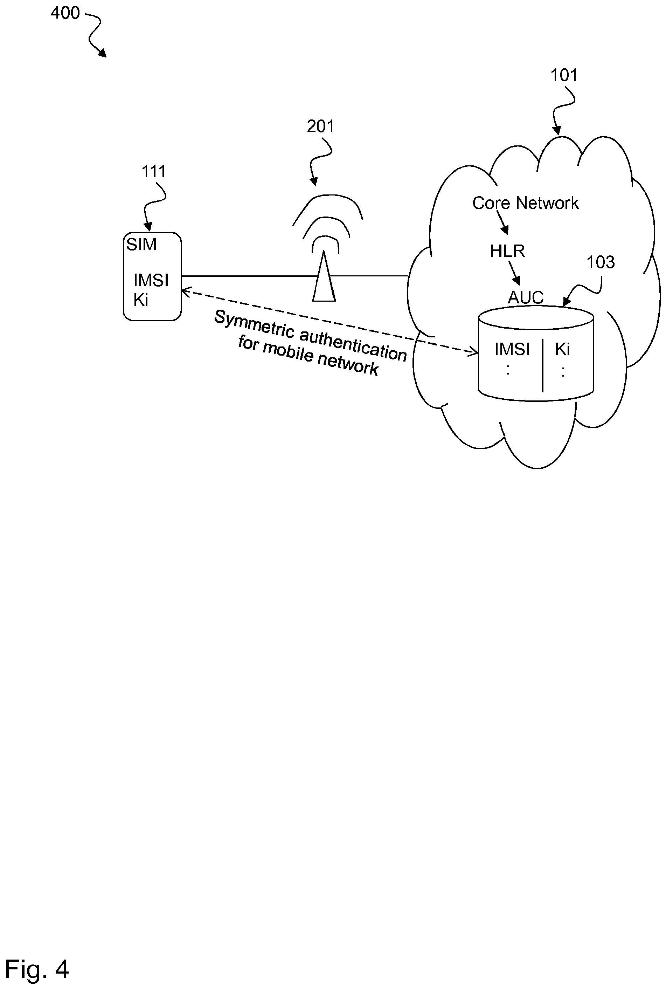

The second authentication server 104 may be configured to establish secure channels between the UE 110 and services and/or applications in the second communication network 102 based on a cryptographic key, Kj, e.g. a key Kj 413 as described below with respect to Fig. 4, propagated together with the authentication status 106 from the first authentication server 103.

The second authentication server 104 may reuse 2G/3G/4G identifier International Mobile Subscriber Identity, IMSI, of the first communication network 101 for identity management purposes in the second communication network 102. The authentication credentials for the first communication network 101 may be stored on a 2G/3G Subscriber Identity Module, SIM, or 4G Universal Subscriber Identity Module, USIM, according ETSI standards.

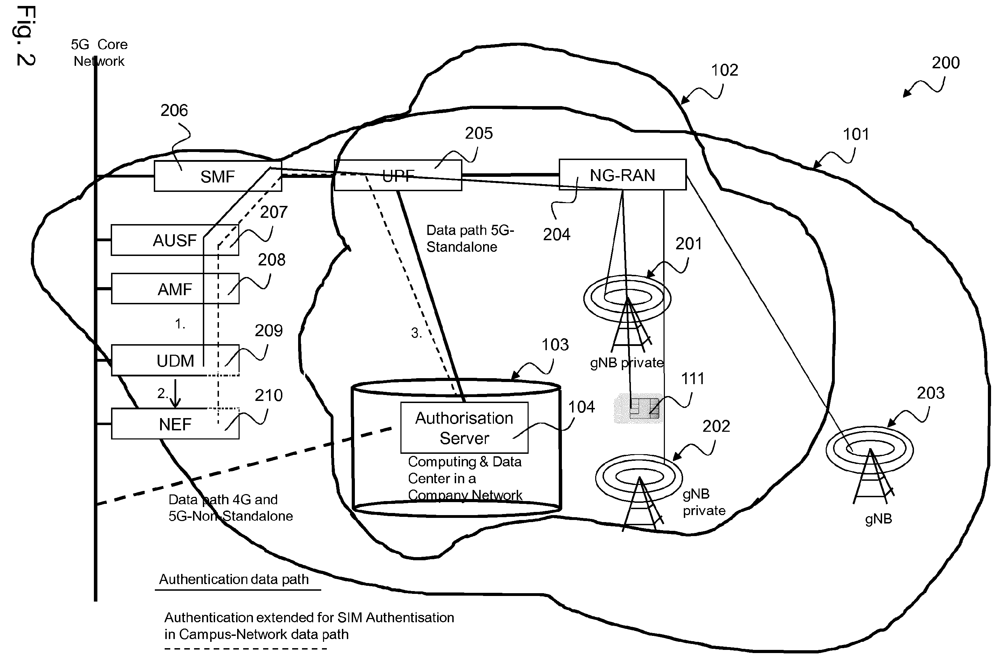

The first communication network 101 may include a virtualized 5G network and the second communication network 102 may include a private data network, e.g. a Company network, e.g. as described below with respect to Fig. 2.

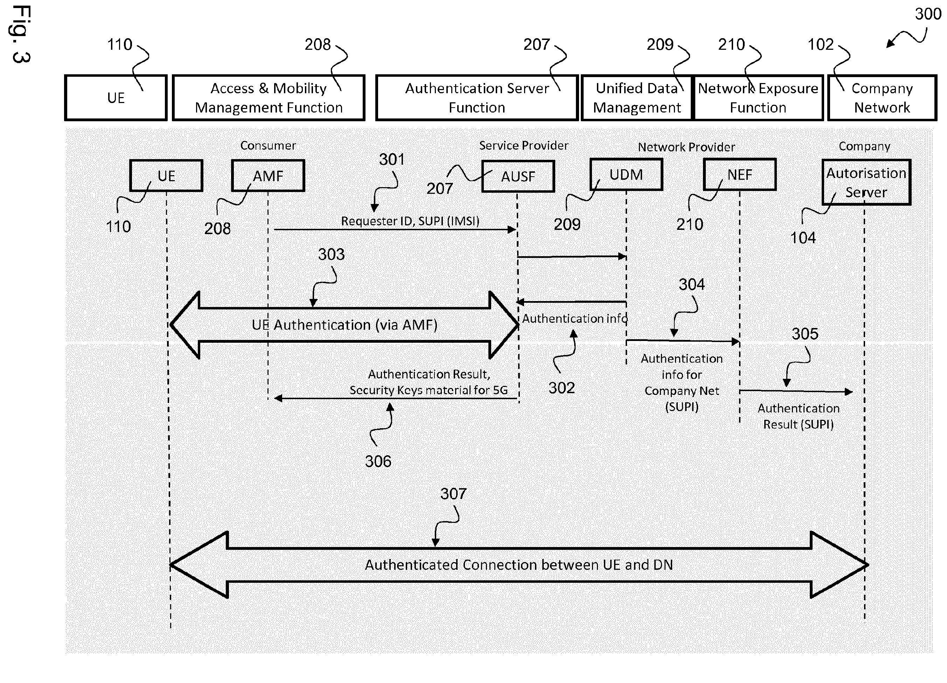

The network interface may be arranged between an Authentication Server Function, e.g. an AUSF 207 as described below with respect to Figures 2 and 3, according 5G standards. The second authentication server 104 may be implemented in form of a generic 5G Network Exposure Function, e.g. a NEF 210 as described below with respect to Figures 2 and 3. The identity and authentication credentials of the first authentication server 103 may be stored in an Unified Data Management, e.g. an UDM 209 as described below with respect to Figures 2 and 3, according 5G standards. The UDM 209 may be configured to store the identity of the UE owner 105 in form of a Subscription Permanent Identifier, SUPI.

The second authentication server 104 may reuse the Subscription Permanent Identifier, SUPI, for identity management purposes in the second communication network 102.

The authentication credentials for the first communication network 101 may be stored on a 5G Universal Subscriber Identity Module, USIM 111, according ETSI standards.

The authentication credentials for the first communication network 101 may be stored, for example, on an embedded or integrated Universal Subscriber Identity Module according ETSI standards that is directly integrated in the User Equipment, UE 110, hardware without external contacts, i.e. by contactless integration.

Fig. 2 shows a system architecture 200 of a 5G Campus network 102 in vicinity of a public 5G network 101 according to the disclosure.

The public 5G network 101 corresponding to the first communication network 101 of Fig. 1 includes multiple gNBs 201, 202, 203 for providing access to the 5G network 101. User Equipments equipped with SIM cards or USIM cards 111 can connect to the 5G network 101 and authenticate on this first communication network 101. The authentication data path that is used for authentication includes NG-RAN (Next Generation Radio Access Network) 204, User Plane Function (UPF) 205, Session Management Function (SMF) 206, Authentication Server Function (AUSF) 207, Access and Management Function (AMF) 208, User Data Management (UDM) 209 and Network Exposure Function (NEF) 210.

The UE (User Equipment) together with the SIM card 111 represents the user equipment or client terminal or mobile communication device which can be operated by the subscriber, i.e. the owner 105 of the UE 110 as described above with respect to Fig. 1, to initiate communication in the first network 101, i.e. starting a communication (mobile originating, MO) or accepting (mobile terminating, MT). The UE 110 can also initiate communication without user interaction, e.g. it can be a machine terminal, e.g. for a car or a robot or other device.

The radio access network node 204 represents the (radio) access network by which the UE 110 obtains access to the first communication network 101. The interface between UE 110 and radio access network node 204 is either an air interface via gNBs 201, 202, 203 as shown in Fig. 2 when the access network 204 is a wireless network (as shown in Fig. 2) or wired when the access network is a wired network (not shown).

The Access and Mobility Management Function (AMF) node 208 represents the access and mobility management function. It manages the access and mobility functions of the UE 110. The AMF 208 may also include network slice selection functionality.

The Session Management Function (SMF) node 206 represents the session management function. It sets up sessions and manages them according to the network policy.

The User Plane Function (UPF) node 205 represents the User Plane function. UPFs can be applied in various configurations and locations, according to the service type.

The UDM (Unified Data Management) node 209 provides a common data management to store subscriber data and profiles. This is equivalent to the functionality of an HSS in 4G systems but is used for both mobile and wired access in the NG Core network.

The AUSF (Authentication Server Function) node 207 provides authentication functionality with which the subscriber or the UE can log on to the network 101.

The Network Exposure function (NEF) node 210 supports exposure of capabilities and events, secure provision of information from external application to 3GPP network, translation of internal/external information.

The 5G network 101 offers the possibility to transfer data for third party services directly from the UPF 205 into a proprietary data network (Company Network 102) without interaction with the core network. The components for the 5G network authentication are not involved. In addition, 5G offers the possibility to integrate third-party services via NEF 210 into the core network 101 of the MNO.

The system 200 illustrates how the security architecture and network authentication of 5G, 101 can be used to secure access to any data network 102. The SIM card 111 also becomes an authentication token for application specific functions.

Via a specific NEF 210, the mobile network operator enables its customers to use the SIM 111 authentication for their own purposes. The UDM 209 is extended so that the credentials for the login in the data network 102 of the third party are also administered there. The NEF 210 acts as a specific AMF for the company network 102 (DN = Data Network).

A corresponding extension of the authentication can also be implemented in the UE 110, especially the SIM 111. Successful authentication in the 5G core network 101 automatically provides the security parameters for a secure connection to the customer's DN 102.

The typical AAA functionality (authentication, authorization and accounting) is thus extended by an authentication path in the company network 102.

The following table shows the different AAA functionalities:

| | Authentication | Authorization | Accounting |
|---|---|---|---|
| Mobile Network Operator | SIM | MNO 5G network | MNO 5G network |
| Company Network (Connectivity) | SIM | MNO 5G network | Company network |
| Company Network (service) | Reusing SIM | Company network | Company network |

In other words, the NEF block 210 allows to progagate the authentication status 106 of the UE owner 105 (analogous to Fig. 1) in the public 5G network 101 from the authentication server 103 of the public 5G network 101 to the authorization/authentication server 104 of the Campus network 102. Hence, authentication of the Campus network 102 is extended by authentication data path in the public 5G network 101 including SIM authentication data path between authentication server 103 of the public 5G network 101 and SIM card 111 of UE owner 105.

Such a communication system 200 provides a solution for reducing complexity and improving security when making resources of a second communication network 102 (the Campus network) available for a UE 110, 111 that is authenticated within in first communication network 101 (the 5G network). The system 200 provides an efficient authentication of the UE in the Campus (or Company) network 102 based on authentication of the UE in the 5G network. The highly secure authentication via the SIM in the public 5G network can be efficiently made available for services, applications or resource usage in the Campus network 102. The extension of the SIM authentication path as shown in Fig. 2 allows reusing the authentication and security infrastructure of the public 5G network 101 for authentication in the corporate network 102. This has particular advantages in combining campus with public networks, as the mobile network operator (MNO)'s highly secure SIM-based authentication infrastructure can be reused for third-party services.

The life-cycle management of the identity and authentication parameters can be performed in the MNO network 101. Hence, the company network 102 does not have to worry about "revoking" new users or "revoking" invalid identities. In many local IAM (Identity & Access Management) systems, poor identity and life cycle management poses a security risk, e.g. for PKI certificates. The novel system 200 has no such security risks.

Further advantages are that authentication parameters are protected by the high security of the SIM card and their related processes, e.g. protected for personalization. Secure management of user identities and cryptographic keys can be done by the mobile operator. The company does not have to invest in data security but can trust on the security infrastructure of the SIM supplier and mobile operator.

Fig. 3 shows an exemplary message diagram 300 for authenticating a UE 110 on the 5G Campus network 102 based on an authentication on the public 5G network according to the disclosure.

The UE 110 requests the AUSF 207 for UE authentication 303 via the AMF 208. Upon receiving the request from UE 100, the AMF 208 requests 301 the AUSF 207 for authentication of the UE 110. This request 301 includes the requester ID, for example the UE ID, and the SUPI including the IMSI.

The identity of the UE (UE ID) may be the IMEI (International Mobile Equipment Identifier) while the IMSI (identity on the SIM) may be assigned to a user, i.e. the owner of the UE.

Hence, the requester ID may be the IMEI and the SUPI may include the IMSI as shown in Fig. 3.

After receiving the request 301, the AUSF 207 request the UDM 209 for authentication information and the UDM 209 transmits the requested authentication information 302 to the AUSF 207. This authentication information may include an authentication status 106 (or authorization result) as described above with respect to Fig. 1. Then, the UDM can transmit the authentication information via NEF 210 to the Company network 102, in particular to the authorization server 104 of the Company network 102. The authentication information can further include the SUPI assigned to the owner of the UE 110. The NEF can transmit an authentication result 305 to the authorization server 104 of the Company network 102. If authentication is successful, an authenticated connection 307 can be established between UE 110 and data network (DN), i.e. Company network 102.

Fig. 4 shows a schematic diagram illustrating a symmetric authentication of a SIM in a mobile network. The SIM may be a SIM 111 as described above with respect to Figures 1 to 3 and the mobile network may correspond to the first communication network 101, e.g. 5G core network as described with respect to Figures 1 to 3. The core network 101 includes a home location register (HLR) that includes the authentication center (AUC), e.g. a first authentication server 103 as described with respect to Figures 1 to 3. The SIM 111 on UE 110 is connected to the core network 103 via a gNB 201, e.g. as described with respect to Fig. 2. The IMSI and the secret key Ki are stored both, on the SIM 111 of UE 110 as well as in the AUC 103. By using these parameters (IMSI and Ki), a symmetric authentication of the SIM 111 for the mobile network 101 can be established, e.g. corresponding to the authentication 112 described above with respect to Fig. 1.

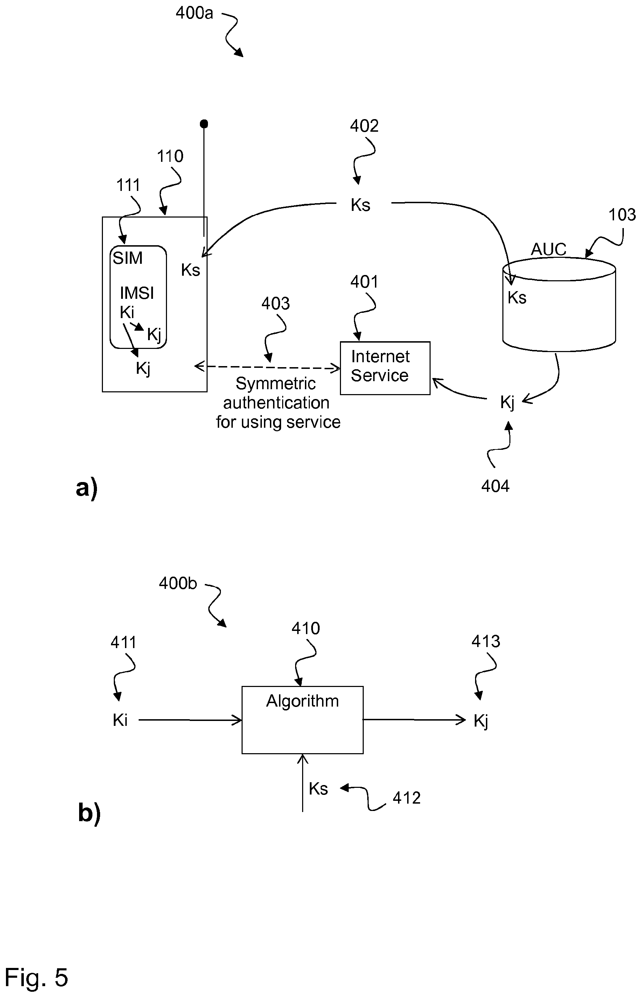

Fig. 5a shows a schematic diagram illustrating a symmetric authentication 400a of a SIM 111 for using a service, in particular an Internet service 401. Fig. 5b shows an exemplary cryptographic algorithm and a procedure 400b for deriving a second authentication key Kj 413 from a first authentication key Ki 411 based on an encryption key Ks 412 by using an encryption algorithm 410.

Usually the authentication of SIM cards cannot be reused for other services, especially for services above the IP layer. Figures 5a and 5b describes a method for the authentication between a mobile terminal, i.e. UE 110 and a service on the Internet 401 without revealing the original key of the mobile network. One variant is the authentication on an "EDGE computing" device as described below with respect to Fig. 6.

In the symmetric authentication 400a of a SIM 111 illustrated in Fig. 5a, the following authentication steps are performed:
In a first step 402, a symmetric key Ks is negotiated between the Authentication Center (AUC) 103 in the core network of the mobile service provider (i.e. the first communication network 101 according to Figures 1 to 3) and the terminal 110. The agreement of the key Ks can be done statically or dynamically via an asymmetric "handshake".

In a second step, based on a derivative function 410, e.g. symmetric encryption, a new authentication key Kj 413 in the AUC 103 and the terminal 110 is calculated from the already existing network authentication key Ki 411 and the Ks 412, as shown in Fig. 5b.

In a third step 404, this new authentication key Kj 413 is passed from the AUC 103 to the service 401 to be used.

In a fourth step 403, terminal 110 and service 401 can authenticate each other with the key Kj 413. For this, any symmetric algorithm 410 can be chosen, e.g. AES256. The network authentication algorithm may be re-used or any other suitable algorithm can be used.

Fig. 6 shows a schematic diagram illustrating an exemplary authentication of an EDGE device 610 based on a SIM module 111 of a mobile terminal 110.

The EDGE Computing device 610 enables server-based applications to be brought "closer" to the user equipment (UE) 110 and thus obtain lower latency in the "round trip time" (RTT). In particular, the EDGE computing device 610 may be integrated in the MNO network, e.g. in the first communication network 101 as described above with respect to Figures 1 to 3. Due to the low latency, complex calculations can run on the EDGE computing device 610 server instead of the UE 110 while still realizing "real-time critical" or "near real-time critical" functionalities.

In the authentication procedure illustrated in Fig. 6, key Kj is forwarded 603 by the AUC 103 to the EDGE Computing Device 610 and used for authentication 604, e.g. a low latency connection between the EDGE Computing device 610 and the terminal 110. Ks that may be provided 601, 602 by the EDGE Computing device 610 to AUC 103 and UE 110 has a limited validity and can be quickly shared with other Edge computing devices.

Mobile 5G Endpoints or terminals 110 (e.g. cars, mobile phones, etc.) can perform ad hoc authentication with a stationary EDGE gateway 610 without having the authentication key Kj directly provided from the AUC 103. Such novel authentication procedure results in higher security and fast authentication.

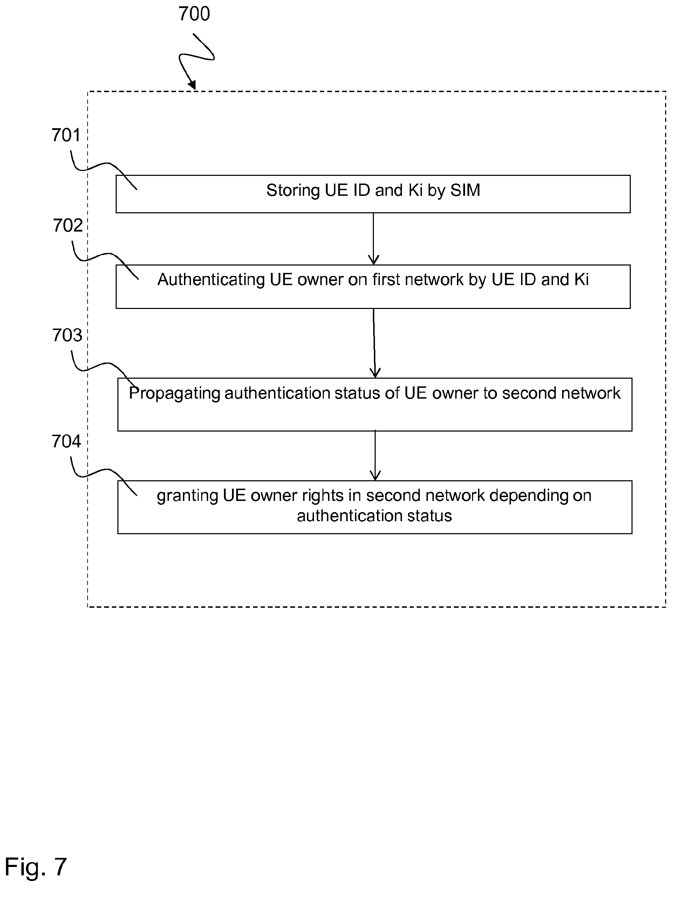

Fig. 7 shows a schematic diagram of a method 700 for propagating an authentication status of an UE owner from a first communication network to a second communication network according to the disclosure.

The method 700 includes storing 701 an identity of an User Equipment (UE) owner, UE ID, for example an International Mobile Subscriber Identity (IMSI) and an authentication key, Ki, by a subscriber identity module (SIM) 111 of the UE 110, e.g., as described above with respect to Fig. 1.

The method 700 further includes authenticating 702 the UE owner 105 on the first communication network 101, by a first authentication server 103 of a first communication network 101, based on the UE ID and the authentication key, Ki, e.g., as described above with respect to Figs. 1 and 2.

The method 700 further includes propagating 703 an authentication status 106 of the UE owner 105 in the first communication network 101, by the first authentication server 103 acting as a master, to a second authentication server 104 of a second communication network 102, e.g., as described above with respect to Figs. 1 and 2.

The method 700 further includes granting 704 the UE owner 105, by the second authentication server 104, rights in the second communication network 102 depending on the authentication status 106 of the UE owner 106 in the first communication network 101, e.g., as described above with respect to Figs. 1 and 2.

The method 700 may further include the functionalities as described above with respect to Figures 1 to 6. For example, the method 700 may include activating, by the second authentication server 104, services and/or applications based on the propagated authentication status 106 of the UE owner 105 in the first communication network 101, e.g., as described above with respect to Figs. 1 and 2.

The method 700 may further include establishing secure channels between the UE 110 and services and/or applications in the second communication network 102 based on a cryptographic key, Kj, propagated together with the authentication status 106 from the first authentication server 103, e.g., as described above with respect to Figs. 1 to 6.

Another aspect of the invention is related to a computer program product comprising program code for performing the methods and procedures or the functionalities described above, when executed on a computer or a processor. The method may be implemented as program code that may be stored on a non-transitory computer medium. The computer program product may implement the techniques described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention.

## Claims

1. A communication system (100, 200), comprising:
an User Equipment, UE (110), comprising a subscriber identity module, SIM (111), storing an identity of an UE owner (105), UE ID, in particular an International Mobile Subscriber Identity, IMSI, and an authentication key, Ki,
a first communication network (101), in particular a cellular network, comprising a first authentication server (103) configured to authenticate (112) the UE owner (105) on the first communication network (101) based on the UE ID and the authentication key, Ki;
a second communication network (102), in particular a local or campus network, comprising a second authentication server (104); and
a network interface between the first authentication server (103) and the second authentication server (104),
wherein the first authentication server (103) acts as master and is configured to propagate (113) an authentication status (106) of the UE owner (105) in the first communication network (101) to the second authentication server (104),
wherein the second authentication server (104) is configured to grant the UE owner (105) rights (114) in the second communication network (102) depending on the authentication status (106) of the UE owner (105) in the first communication network (101),
**characterized in that**
the second authentication server (104) is configured to establish secure channels between the UE (110) and services and/or applications in the second communication network (102) based on a cryptographic key, Kj (413), propagated together with the authentication status (106) from the first authentication server (103).

2. The communication system (100, 200) of claim 1,
wherein the second authentication server (104) is configured to activate services (401) and/or applications based on the propagated authentication status (106) of the UE owner (105) in the first communication network (101).

3. The communication system (100, 200) of claim 1,
wherein the second authentication server (104) is located in an Edge computing device (610) and is configured to activate local services and/or applications, which are executed on a computing platform of the Edge computing device (610).

4. The communication system (100, 200) of one of the preceding claims,
wherein the second authentication server (104) is configured to reuse 2G/3G/4G identifier International Mobile Subscriber Identity, IMSI, of the first communication network (101) for identity management purposes in the second communication network (102).

5. The communication system (100, 200) of one of the preceding claims,
wherein authentication credentials for the first communication network (101) are stored on a 2G/3G Subscriber Identity Module, SIM, or 4G Universal Subscriber Identity Module, USIM, according ETSI standards.

6. The communication system (100, 200) of one of the preceding claims,
wherein the first communication network (101) comprises a virtualized 5G network and the second communication network (102) comprises a private data network, in particular a company network.

7. The communication system (100, 200) of claim 6,
wherein the network interface is arranged between an Authentication Server Function, AUSF (207), according 5G standards and wherein the second authentication server (104) is implemented in form of a generic 5G Network Exposure Function, NEF (210),
wherein identity and authentication credentials of the first authentication server (103) are stored in an Unified Data Management, UDM (209), according 5G standards.

8. The communication system (100, 200) of claim 7,
wherein the UDM (209) is configured to store the identity of the UE owner (105) in form of a Subscription Permanent Identifier, SUPI.

9. The communication system (100, 200) of claim 8,
wherein the second authentication server (104) is configured to reuse the Subscription Permanent Identifier, SUPI, for identity management purposes in the second communication network (102).

10. The communication system (100, 200) of claim 8
wherein authentication credentials for the first communication network (101) are stored on a 5G Universal Subscriber Identity Module, USIM (111), according ETSI standards.

11. The communication system (100, 200) of claim 10
wherein the authentication credentials for the first communication network (101) are stored on an embedded or integrated Universal Subscriber Identity Module according ETSI standards directly integrated in the User Equipment, UE (110), hardware without external contacts.

12. A method (700) for propagating an authentication status (106) of an User Equipment, UE (110), owner (105) from a first communication network (101) to a second communication network (102), the method comprising:
storing (701) an identity of an User Equipment, UE, owner, UE ID, in particular an International Mobile Subscriber Identity, IMSI, and an authentication key, Ki, by a subscriber identity module, SIM (111), of the UE (110);
authenticating (702) the UE owner (105) on the first communication network (101), by a first authentication server (103) of a first communication network (101), based on the UE ID and the authentication key, Ki;
propagating (703) an authentication status (106) of the UE owner (105) in the first communication network (101), by the first authentication server (103) acting as a master, to a second authentication server (104) of a second communication network (102); and
granting (704) the UE owner (105), by the second authentication server (104), rights in the second communication network (102) depending on the authentication status (106) of the UE owner (106) in the first communication network (101),
**characterized in that** the method comprises
establishing, by the second authentication server (104), secure channels between the UE (110) and services and/or applications in the second communication network (102) based on a cryptographic key, Kj, propagated together with the authentication status (106) from the first authentication server (103).

13. The method (700) of claim 12, comprising:
activating, by the second authentication server (104), services and/or applications based on the propagated authentication status (106) of the UE owner (105) in the first communication network (101).

## Patentansprüche

1. Kommunikationssystem (100, 200), umfassend:
eine Benutzereinrichtung, UE (110), umfassend ein Teilnehmeridentitätsmodul, SIM (111), das eine Identität eines UE-Besitzers (105), UE ID, insbesondere eine internationale Mobilteilnehmerkennung, IMSI, und einen Authentisierungsschlüssel, Ki, speichert,
ein erstes Kommunikationsnetzwerk (101), insbesondere ein Mobilfunknetzwerk, umfassend einen ersten Authentisierungsserver (103), der dazu eingerichtet ist, den UE-Besitzer (105) basierend auf der UE-ID und dem Authentisierungsschlüssel, Ki, bei dem ersten Kommunikationsnetzwerk (101) zu authentisieren (112);
ein zweites Kommunikationsnetzwerk (102), insbesondere ein lokales Netzwerk oder ein Campusnetzwerk, umfassend einen zweiten Authentisierungsserver (104); und
eine Netzwerkschnittstelle zwischen dem ersten Authentisierungsserver (103) und dem zweiten Authentisierungsserver (104),
wobei der erste Authentisierungsserver (103) als Master agiert und dazu eingerichtet ist, einen Authentisierungsstatus (106) des UE-Besitzers (105) in dem ersten Kommunikationsnetzwerk (101) an den zweiten Authentisierungsserver (104) zu propagieren (113),
wobei der zweite Authentisierungsserver (104) dazu eingerichtet ist, dem UE-Besitzer (105) abhängig von dem Authentisierungsstatus (106) des UE-Besitzers (105) in dem ersten Kommunikationsnetzwerk (101) Rechte (114) in dem zweiten Kommunikationsnetzwerk (102) zu gewähren,
**dadurch gekennzeichnet, dass**
der zweite Authentisierungsserver (104) dazu eingerichtet ist, basierend auf einem zusammen mit dem Authentisierungsstatus (106) von dem ersten Authentisierungsserver (103) propagierten kryptographischen Schlüssel, Kj (413), sichere Kanäle zwischen dem UE (110) und Diensten und/oder Applikationen in dem zweiten Kommunikationsnetzwerk (102) einzurichten.

2. Kommunikationssystem (100, 200) nach Anspruch 1,
wobei der zweite Authentisierungsserver (104) dazu eingerichtet ist, basierend auf dem propagierten Authentisierungsstatus (106) des UE-Besitzers (105) in dem ersten Kommunikationsnetzwerk (101) Dienste (401) und/oder Applikationen zu aktivieren.

3. Kommunikationssystem (100, 200) nach Anspruch 1,
wobei der zweite Authentisierungsserver (104) in einer Edge-Computervorrichtung (610) angeordnet ist und dazu eingerichtet ist, lokale Dienste und/oder Applikationen zu aktivieren, die auf einer Computing-Plattform der Edge-Computervorrichtung (610) ausgeführt werden.

4. Kommunikationssystem (100, 200) nach einem der vorhergehenden Ansprüche,
wobei der zweite Authentisierungsserver (104) dazu eingerichtet ist, einen 2G/3G/4G-Identifikator, internationale Mobilteilnehmerkennung, IMSI, des ersten Kommunikationsnetzwerks (101) zu Identitätsverwaltungszwecken in dem zweiten Kommunikationsnetzwerk (102) wiederzuverwenden.

5. Kommunikationssystem (100, 200) nach einem der vorhergehenden Ansprüche,
wobei Authentisierungs-Anmeldedaten für das erste Kommunikationsnetzwerk (101) auf einem 2G/3G-Teilnehmeridentitätsmodul, SIM, oder einem universellen 4G-Teilnehmeridentitätsmodul, USIM, gemäß ETSI-Standards gespeichert sind.

6. Kommunikationssystem (100, 200) nach einem der vorhergehenden Ansprüche,
wobei das erste Kommunikationsnetzwerk (101) ein virtualisiertes 5G-Netzwerk umfasst und das zweite Kommunikationsnetzwerk (102) ein privates Datennetzwerk umfasst, insbesondere ein Firmennetzwerk.

7. Kommunikationssystem (100, 200) nach Anspruch 6,
wobei die Netzwerkschnittstelle zwischen einer Authentisierungsserverfunktion, AUSF (207), gemäß 5G-Standards angeordnet ist, und wobei der zweite Authentisierungsserver (104) in Form einer generischen 5G Network Exposure Function, NEF (210), implementiert ist,
wobei Identität und Authentisierungs-Anmeldedaten des ersten Authentisierungsservers (103) in einem Unified Data Management, UDM (209), gemäß 5G-Standards gespeichert sind.

8. Kommunikationssystem (100, 200) nach Anspruch 7,
wobei das UDM (209) dazu eingerichtet ist, die Identität des UE-Besitzers (105) in Form einer permanenten Teilnehmerkennung, SUPI, zu speichern.

9. Kommunikationssystem (100, 200) nach Anspruch 8,
wobei der zweite Authentisierungsserver (104) dazu eingerichtet ist, die permanente Teilnehmerkennung, SUPI, für Identitätsverwaltungszwecke in dem zweiten Kommunikationsnetzwerk (102) wiederzuverwenden.

10. Kommunikationssystem (100, 200) nach Anspruch 8,
wobei Authentisierungs-Anmeldedaten für das erste Kommunikationsnetzwerk (101) auf einem universellen 5G-Teilnehmeridentitätsmodul, USIM (111), gemäß ETSI-Standards gespeichert sind.

11. Kommunikationssystem (100, 200) nach Anspruch 10,
wobei die Authentisierungs-Anmeldedaten für das erste Kommunikationsnetzwerk (101) auf einem eingebetteten oder integrierten universellen Teilnehmeridentitätsmodul gemäß ETSI-Standards gespeichert sind, das direkt ohne externe Kontakte in die Hardware der Benutzereinrichtung, UE (110), integriert ist.

12. Verfahren (700) zum Propagieren eines Authentisierungsstatus (106) eines Besitzers (105) einer Benutzereinrichtung, UE (110), von einem ersten Kommunikationsnetzwerk (101) an ein zweites Kommunikationsnetzwerk (102), wobei das Verfahren umfasst:
Speichern (701) einer Identität, UE ID, eines Besitzers einer Benutzereinrichtung, UE, insbesondere einer internationalen Mobilteilnehmerkennung, IMSI, und eines Authentisierungsschlüssels, Ki, durch ein Teilnehmeridentitätsmodul, SIM (111), der UE (110);
Authentisieren (702) des UE-Besitzers (105) bei dem ersten Kommunikationsnetzwerk (101) durch einen ersten Authentisierungsserver (103) eines ersten Kommunikationsnetzwerks (101) basierend auf der UE-ID und dem Authentisierungsschlüssel, Ki;
Propagieren (703) eines Authentisierungsstatus (106) des UE-Besitzers (105) in dem ersten Kommunikationsnetzwerk (101) durch den ersten Authentisierungsserver (103), der als Master agiert, an einen zweiten Authentisierungsserver (104) eines zweiten Kommunikationsnetzwerks (102); und
Gewähren (704) von Rechten in dem zweiten Kommunikationsnetzwerk (102) durch den zweiten Authentisierungsserver (104) an den UE-Besitzer (105) abhängig von dem Authentisierungsstatus (106) des UE-Besitzers (106) in dem ersten Kommunikationsnetzwerk (101),
**dadurch gekennzeichnet**, das das Verfahren umfasst:
Einrichten, durch den zweiten Authentisierungsserver (104), von sicheren Kanälen zwischen dem UE (110) und Diensten und/oder Applikationen in dem zweiten Kommunikationsnetzwerk (102) basierend auf einem zusammen mit dem Authentisierungsstatus (106) von dem ersten Authentisierungsserver (103) propagierten kryptographischen Schlüssel, Kj.

13. Verfahren (700) nach Anspruch 12, umfassend:
Aktivieren, durch den zweiten Authentisierungsserver (104) von Diensten und/oder Applikationen basierend auf dem propagierten Authentisierungsstatus (106) des UE-Besitzers (105) in dem ersten Kommunikationsnetzwerk (101) .

## Revendications

1. Système de communication (100, 200) comprenant :
un équipement d'utilisateur (UE) (110) comprenant un module d'identité d'abonné (SIM) (111) mémorisant une identité du propriétaire de l'UE (105), UE ID, en particulier une identité d'abonné mobile internationale (IMSI) et une clé d'authentification (Ki) ;
un premier réseau de communication (101), en particulier un réseau cellulaire, comprenant un premier serveur d'authentification (103) configuré pour authentifier (112) le propriétaire de l'UE (105) sur le premier réseau de communication (101) sur la base de l'UE ID et de la clé d'authentification (Ki) ;
un deuxième réseau de communication (102), en particulier un réseau local ou de campus, comprenant un deuxième serveur d'authentification (104) ; et
une interface réseau entre le premier serveur d'authentification (103) et le deuxième serveur d'authentification (104),
dans lequel le premier serveur d'authentification (103) fait office de maître et est configuré pour propager (113) un statut d'authentification (106) du propriétaire de l'UE (105) dans le premier réseau de communication (101) au deuxième serveur d'authentification (104),
dans lequel le deuxième serveur d'authentification (104) est configuré pour accorder au propriétaire de l'UE (105) des droits (114) dans le deuxième réseau de communication (102) en fonction du statut d'authentification (106) du propriétaire de l'UE (105) dans le premier réseau de communication (101),
**caractérisé en ce que**
le deuxième serveur d'authentification (104) est configuré pour établir des canaux sécurisés entre l'UE (110) et les services et/ou applications du deuxième réseau de communication (102) sur la base d'une clé cryptographique, Kj (413), propagée avec le statut d'authentification (106) depuis le premier serveur d'authentification (103).

2. Système de communication (100, 200) selon la revendication 1,
dans lequel le deuxième serveur d'authentification (104) est configuré pour activer des services (401) et/ou des applications en fonction de l'état d'authentification propagé (106) du propriétaire de l'UE (105) sur le premier réseau de communication (101).

3. Système de communication (100, 200) selon la revendication 1,
dans lequel le deuxième serveur d'authentification (104) est situé dans un dispositif de calcul informatique Edge (610) et est configuré pour activer des services et/ou des applications locales, exécutés sur la plateforme de calcul informatique du dispositif de calcul informatique Edge (610).

4. Système de communication (100, 200) selon une des revendications précédentes,
dans lequel le deuxième serveur d'authentification (104) est configuré pour réutiliser l'identifiant d'identité d'abonné mobile internationale IMSI 2G/3G/4G du premier réseau de communication (101) à des fins de gestion d'identité sur le deuxième réseau de communication (102).

5. Système de communication (100, 200) selon une des revendications précédentes,
dans lequel les informations d'identification d'authentification pour le premier réseau de communication (101) sont mémorisées sur une carte SIM 2G/3G ou une carte USIM 4G, conformément aux normes ETSI.

6. Système de communication (100, 200) selon une des revendications précédentes,
dans lequel le premier réseau de communication (101) comprend un réseau 5G virtualisé et le deuxième réseau de communication (102) comprend un réseau de données privé, notamment un réseau d'entreprise.

7. Système de communication (100, 200) selon la revendication 6,
dans lequel l'interface réseau est agencée entre une fonction de serveur d'authentification (AUSF) (207), conforme aux normes 5G, et dans lequel le deuxième serveur d'authentification (104) est implémenté sous la forme d'une fonction d'exposition au réseau 5G générique, NEF (210),
dans lequel les informations d'identification et d'authentification du premier serveur d'authentification (103) sont mémorisées dans un système de gestion de données unifié, UDM (209), conforme aux normes 5G**.**

8. Système de communication (100, 200) selon la revendication 7,
dans lequel l'UDM (209) est configuré pour mémoriser l'identité du propriétaire de l'UE (105) sous la forme d'un identifiant permanent d'abonnement (SUPI).

9. Système de communication (100, 200) selon la revendication 8,
dans lequel le deuxième serveur d'authentification (104) est configuré pour réutiliser l'identifiant permanent d'abonnement (SUPI) à des fins de gestion d'identité sur le deuxième réseau de communication (102).

10. Système de communication (100, 200) selon la revendication 8,
dans lequel les informations d'identification d'authentification pour le premier réseau de communication (101) sont mémorisées sur un module d'identité d'abonné universel 5G, USIM (111), conforme aux normes ETSI.

11. Système de communication (100, 200) selon la revendication 10,
dans lequel les informations d'identification d'authentification pour le premier réseau de communication (101) sont mémorisées sur un module d'identité d'abonné universel embarqué ou intégré, conforme aux normes ETSI, directement intégré au matériel de l'équipement utilisateur, UE (110), sans contacts externes.

12. Procédé (700) de propagation d'un statut d'authentification (106) d'un équipement d'utilisateur (UE) (110), propriétaire (105) d'un premier réseau de communication (101) à un deuxième réseau de communication (102), le procédé comprenant :
la mémorisation (701) d'une identité d'un équipement utilisateur, UE, propriétaire, UE ID, en particulier d'une identité d'abonné mobile internationale (IMSI) et d'une clé d'authentification (Ki), par un module d'identité d'abonné, SIM (111), de l'UE (110) ;
l'authentification (702) du propriétaire de l'UE (105) sur le premier réseau de communication (101), par un premier serveur d'authentification (103) d'un premier réseau de communication (101), sur la base de l'UE ID et de la clé d'authentification, Ki ;
la propagation (703) d'un statut d'authentification (106) du propriétaire de l'UE (105) dans le premier réseau de communication (101), par le premier serveur d'authentification (103) faisant office de maître, à un deuxième serveur d'authentification (104) d'un deuxième réseau de communication (102) ; et
l'accord (704) au propriétaire de l'UE (105), par le deuxième serveur d'authentification (104), des droits sur le deuxième réseau de communication (102) en fonction de l'état d'authentification (106) du propriétaire de l'UE (106) sur le premier réseau de communication (101),
**caractérisé en ce que** le procédé comprend
l'établissement, par le deuxième serveur d'authentification (104), de canaux sécurisés entre l'UE (110) et les services et/ou applications du deuxième réseau de communication (102) sur la base d'une clé cryptographique, Kj, propagée avec l'état d'authentification (106) depuis le premier serveur d'authentification (103).

13. Procédé (700) de la revendication 12, comprenant :
l'activation, par le deuxième serveur d'authentification (104), des services et/ou applications sur la base de l'état d'authentification propagé (106) du propriétaire de l'UE (105) sur le premier réseau de communication (101).
